# FASCICULE DE BREVET EUROPEEN

(11) **EP 1 259 792 B1**
(45) Date de publication et mention de la délivrance du brevet: **09.10.2013**
(21) Numéro de dépôt: 01907813.8
(22) Date de dépôt: 15.02.2001
(51) Int. Cl.: G01N 1/08, E21B 25/18

(54) **PROCEDE ET DISPOSITIF POUR FAIRE PENETRER DANS LE SOUS-SOL MARIN, EN PARTICULIER A DES PROFONDEURS IMPORTANTES, UN OUTIL TUBULAIRE DE PRELEVEMENTS D'ECHANTILLONS DU SOL OU DE MESURE DES CARACTERISTIQUES DE CE SOL**
VERFAHREN UND VORRICHTUNG ZUR EINBRINGUNG EINES ROHRFÖRMIGEM WERKZEUGES IN DEN SEEBODEN ZWECKS PROBENENTNAHME ODER MESSUNG DER EIGENSCHAFTEN DIESES BODENS, INSBESONDERE IN GROSSER TIEFE
METHOD AND DEVICE FOR DRIVING INTO THE MARINE SUBSURFACE AT GREAT DEPTHS, A TUBULAR TOOL FOR SOIL SAMPLING OR FOR MEASURING SOIL CHARACTERISTICS

(30) Priorité: 17.02.2000 FR 0001956
(43) Date de publication de la demande: 27.11.2002
(73) Titulaire: Bienvenu, Veronique, 92800 Puteaux (FR); Bessonart, Julien, 92800 Puteaux (FR)
(72) Inventeur: BESSONART, Julien, F-92800 Puteaux (FR)
(74) Mandataire: Mahler, Peter
(86) Numéro de dépôt international: PCT/FR2001/000453
(87) Numéro de publication internationale: WO 2001/061309

(56) Documents cités:
- WO-A-99/09294
- WO-A-99/10620
- US-A- 2 176 477
- US-A- 3 412 814
- US-A- 3 741 320

## Description

La présente invention a pour objet un procédé et un dispositif pour faire pénétrer dans le sous-sol marin, en particulier à des profondeurs importantes dépassant un millier de mètres, un outil tubulaire de prélèvement d'échantillons du sol ou de mesure des caractéristiques de ce sol.

Lorsqu'on veut effectuer des prélèvements d'échantillons du sous-sol marin ou des mesures des caractéristiques de ce sous-sol à des profondeurs importantes dépassant un millier de mètres, on se heurte à de grosses difficultés de mise en oeuvre. À ces profondeurs importantes il n'est plus possible d'utiliser des scaphandriers et l'utilisation de robots ou de sous-marins spécialisés dans ces techniques est très coûteuse.

Pour le prélèvement d'échantillons du sol diverses techniques de carottiers lancés depuis la surface à partir de navires ou de barges de travail ont été mises au point. Bien qu'intéressantes, ces techniques ne donnent pas toute satisfaction, dans la mesure où il est extrêmement difficile de contrôler et de commander de façon précise la pénétration du carottier dans le sol marin et en particulier l'endroit précis et l'angle de pénétration du carottier. La pénétration du carottier dans cette technique provenant essentiellement de l'inertie cinétique acquise lors de la chute contrôlée du carottier, cette technique n'est pas appropriée lorsque le sous-sol marin est constitué de terrains à faible cohésion, le sous-sol étant profondément déformé dans ce cas sous l'effet de l'impact. En outre, la qualité de la carotte prélevée est médiocre du fait qu'il n'est pas possible de contrôler la vitesse de pénétration du carottier dans le sous-sol et que cette vitesse est évidemment décroissante au fur et à mesure de la pénétration.

Pour tenter de remédier aux difficultés ci dessus mentionnées des carottiers lancés, d'autres techniques ont été développées, et notamment des techniques par battage en utilisant des moteurs hydrauliques, pneumatiques ou électriques, qui vont faire pénétrer dans le sous-sol marin un carottier ou une sonde de mesure préalablement descendu à l'endroit voulu. Outre qu'il s'agit de solutions très coûteuses et complexes nécessitant notamment la mise en place préalable sur le sous-sol marin à l'endroit voulu d'un système qui va permettre le guidage et l'orientation de la sonde de mesure ou du carottier, les résultats obtenus sont restés très décevants.

Conformément à l'invention, un dispositif pour faire pénétrer dans le sous-sol marin, en particulier à profondeurs importantes dépassant un millier de mètres, un outil tubulaire de prélèvement d'échantillons du sol ou de mesure des caractéristiques de ce sol, est caractérisé en ce que l'outil tubulaire que l'on veut faire pénétrer dans le sous-sol marin est assujetti à une embase de positionnement sur le fond marin, et le dispositif comprend au moins un vérin fluidique, pouvant être commandé de la surface, qui est fixé à ladite embase comprenant un piston se déplaçant dans une chambre annulaire cylindrique à axe dirigé parallèlement à l'axe de pénétration de l'outil, en entraînant l'outil en fonction de l'évacuation ou de l'admission du fluide qui est réalisée dans ladite chambre, ledit piston étant soumis à la pression hydrostatique régnant à la profondeur où a été descendu le dispositif en étant mis en communication avec le milieu marin de son côté extérieur à ladite chambre.

On comprend que de la sorte, c'est la force de la pression hydrostatique régnant à la profondeur de travail qui va permettre la pénétration dans le sous-sol marin du carottier ou de l'instrument de mesure, force qui peut être considérable et qui sera précisément connue puisqu'elle est fonction de la profondeur de travail (c'est-à-dire de la pression hydrostatique régnant sur le sous-sol marin) et de la surface de la face du piston soumise à cette pression. En outre, le mouvement de pénétration étant directement fonction du déplacement du piston dans la chambre du vérin, c'est-à-dire du volume de fluide évacué de la chambre, il suffira pour contrôler ce mouvement de contrôler en correspondance cette évacuation.

Selon une autre caractéristique avantageuse du dispositif de l'invention, l'outil tubulaire constitue au moins en partie le piston précité du vérin fluidique. Avantageusement, vers la partie supérieure du vérin, est disposé un piston annulaire qui coulisse de façon étanche dans ladite chambre en étant solidaire de la paroi extérieure de la partie en regard de l'outil, tandis qu'à la base du vérin se trouve un piston annulaire qui est solidaire de la paroi intérieure du tube extérieur du vérin et dans lequel coulisse de façon étanche la paroi extérieure de la partie en regard de l'outil. De cette façon, l'outil tubulaire peut-être constitué simplement essentiellement sous la forme d'une tige de piston qui coulisse intérieurement dans la chambre cylindrique extérieure du vérin et à laquelle est fixée, dans la partie supérieure, par exemple par soudage, le piston sur lequel va agir la pression hydrostatique du milieu marin.

Selon un mode de réalisation préféré, le dispositif comprend au moins une pompe hydraulique montée sur ladite embase pour réaliser l'admission ou l'évacuation du fluide dans ladite chambre. En commandant ainsi depuis la surface le débit d'évacuation ou de remplissage de la chambre du vérin, il devient possible de commander précisément les mouvements de pénétration ou de retrait du carottier ou de la sonde de mesure qui constitue le piston du vérin. De la sorte, on peut obtenir des qualités de carotte nettement améliorées de même que des qualités de mesure relevées de précision inégalée.

De façon préférentielle, l'embase précitée est solidaire d'un piétement qui assure le bon positionnement et la bonne orientation du dispositif sur le sous-sol marin. Ce piétement peut être un piétement articulé, un piétement télescopique ou tout autre piétement qui peut être commandé par exemple hydrauliquement, de type tripode par exemple éventuellement susceptible de se déplacer et notamment de s'orienter par rapport à la verticale.

De façon à permettre une bonne tenue du piétement sur le sous-sol marin, le piètement est avantageusement pourvu de pieds à succion, au moins une pompe hydraulique étant prévue sur l'embase pour réaliser cette succion. Lorsqu'on utilise une telle technique, il devient possible à partir d'une structure légère de créer la force de réaction adéquate permettant d'utiliser une force de pénétration importante de l'outil dans le sous-sol marin sans avoir à lester considérablement l'embase.

Dans le cas où le dispositif est utilisé en tant que carottier, on prévoit avantageusement que l'outil tubulaire comporte au moins à son extrémité basse un organe d'obturation telle qu'une vanne à boisseau. De cette façon, il est possible de remonter la carotte prélevée en évitant toute détérioration de l'échantillon de sol.

L'invention vise encore un procédé pour faire pénétrer dans le sous-sol marin, en particulier à des profondeurs importantes dépassant un millier de mètres un outil tubulaire de prélèvements d'échantillons du sol ou de mesure des caractéristiques de ce sol, commandé depuis la surface, à partir d'une instrumentation embarquée sur ledit outil, le mouvement de pénétration dans le sous-sol marin de l'outil ou son mouvement d'extraction du sous-sol marin étant commandé par l'évacuation du fluide contenu dans la chambre ou par l'admission du fluide dans cette chambre.

D'autres caractéristiques, objets et avantages de l'invention apparaîtront plus clairement de la description détaillée qui va suivre, faite en référence aux dessins annexés illustrant de façon schématique, à titre d'exemple seulement un mode de mise en oeuvre possible de l'invention.

Dans ces dessins :
la figure 1 est une vue en coupe longitudinale d'un outil pénétrateur conforme à l'invention ;
la figure 2 est une vue schématique à plus petite échelle que celle de la figure 1 montrant en position repliée et en vue perspective une embase pour la mise en oeuvre de l'outil conforme à l'invention ;
la figure 3 est une vue agrandie du détail entouré III de la figure 2 ;
la figure 4 montre comme la figure 2 l'embase en vue perspective, le piétement étant déployé ;
la figure 5 est une vue agrandie du détail entouré V à la figure 4 ;
la figure 6 est une vue agrandie du détail entouré VI à la figure 4.

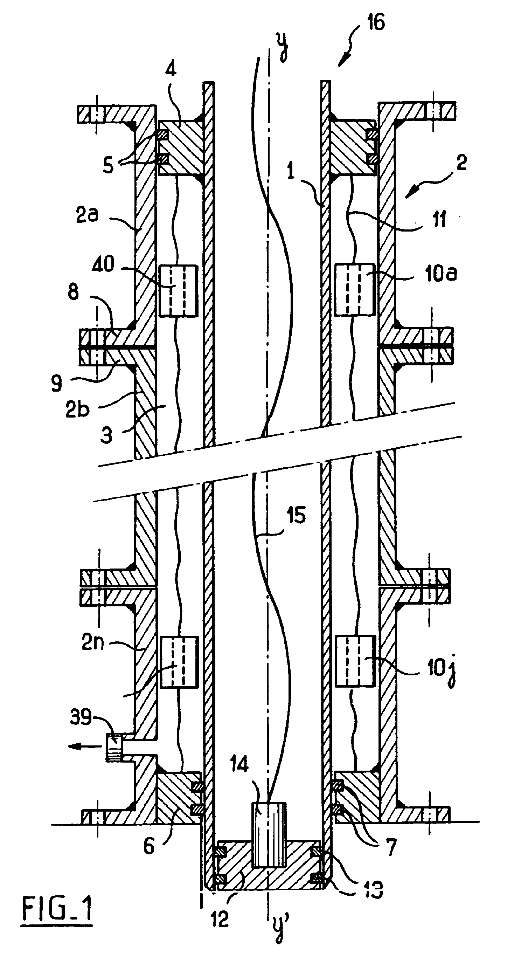

On se reportera tout d'abord à la figure 1 dans laquelle on a représenté un outil pénétrateur conforme à l'invention.

L'outil pénétrateur illustré à la figure 1 est essentiellement constitué sous forme tubulaire avec un tube intérieur 1, un tube extérieur 2, entre lesquels deux tubes est ménagée une chambre annulaire 3. À sa partie supérieure, le tube intérieur 1 est solidaire, par exemple par soudage, d'un piston annulaire 4 qui coulisse en étanchéité contre la paroi intérieure du tube extérieur 2 en comportant par exemple des segments d'étanchéité 5. À sa partie basse, le tube intérieur 1 coulisse par sa paroi extérieure de façon étanche contre un piston annulaire 6 solidaire du tube extérieur 2, par exemple par soudage. Pour réaliser l'étanchéité le piston 6 peut comprendre par exemple des segments d'étanchéité 7.

Pour faciliter le montage et pour permettre une adaptation à volonté de la longueur de l'outil pénétrateur, le tube intérieur 1 est avantageusement réalisé en plusieurs tronçons qui se vissent les uns au bout des autres, et qui peuvent être constitués par exemple en acier. De la même façon, le tube extérieur 2 est avantageusement réalisé en plusieurs tronçons qui ont été repérés au dessin 2a, 2b, ..., 2n. Dans l'exemple illustré les différents tronçons 2a, 2b, 2n, sont réunis les uns au bout des autres par des viroles ou brides de jonction telles que les brides référencées 8,9 réunissant les deux tronçons 2a, 2b et améliorant la rigidité de l'ensemble monté.

De façon à améliorer la résistance à la tenue en pression de la chambre 3, le dispositif comporte avantageusement des entretoises annulaires référencées 10a, ..., 10j à la figure 1. Ces entretoises peuvent être fixées à distance les unes des autres le long de câbles référencés 11, tout en permettant leur coulissement sur les câbles lorsque le tube intérieur 1 coulisse à l'intérieur du tube extérieur 2 et que le piston 4 se rapproche du piston 6. Les entretoises comportent également des trous 40 pour le libre passage du fluide dans la chambre 3 de part et d'autre d'elles.

À l'extrémité inférieure du tube intérieur 1, on aperçoit un piston 12 qui ferme de façon étanche l'extrémité inférieure du tube 1 en présentant à cet effet des segments d'étanchéité 13. Sur le piston 12 a été schématisée une instrumentation 14 qui est fixée au bout d'un câble 15 d'alimentation et de positionnement de l'instrumentation 14.

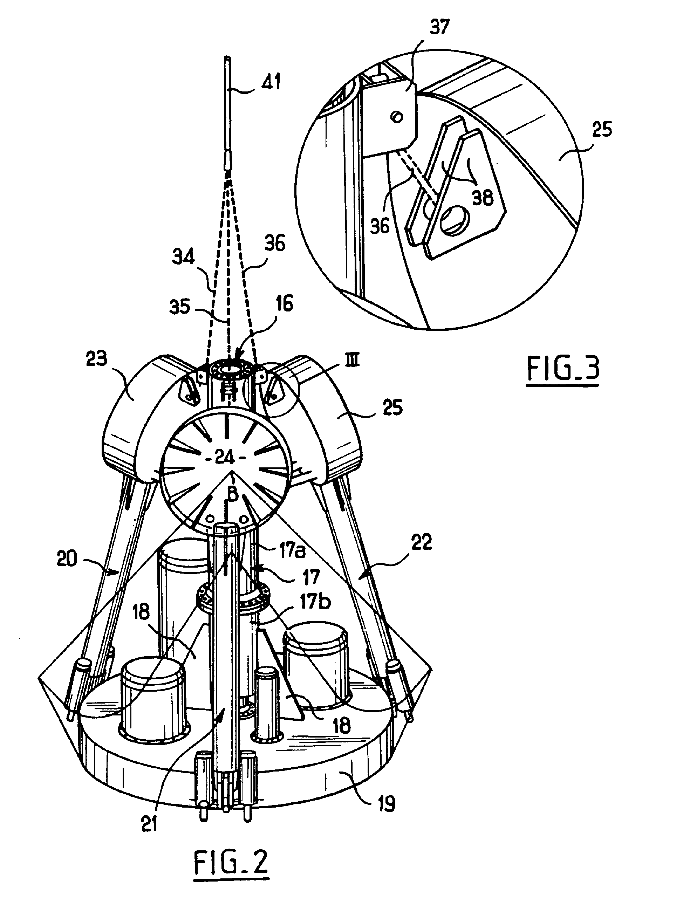

Le dispositif pénétrateur référencé dans son ensemble 16 qui vient d'être décrit à la figure 1 est destiné à être monté sur une embase de positionnement sur le sous-sol marin que l'on va décrire maintenant plus particulièrement en relation aux figures 2 à 6 des dessins.

Comme on le voit plus clairement à la figure 2, le dispositif pénétrateur 16, est monté en étant verrouillé à l'intérieur d'un tube 17 dont le diamètre intérieur est légèrement plus grand que le diamètre extérieur des brides telles que référencées 8,9 à la figure 1. Ce tube 17 est d'une longueur suffisante pour permettre une bonne tenue de l'outil pénétrateur 16 à l'intérieur de lui. Il peut être plus court, notamment si le dispositif pénétrateur est très long. Ce verrouillage peut être réalisé par tout moyen, par exemple par un système de verrouillage à baïonnette entre le tube extérieur 2 du dispositif pénétrateur et la surface intérieure du tube 17, ou par un système à cames qui permettra de coincer le tube 2 dans le tube 17.

Le tube 17 peut être constitué en plusieurs tronçons, par exemple en deux tronçons comme illustré au dessin respectivement 17a, 17b réunis par des brides comme les tronçons 2 du tube extérieur du dispositif pénétrateur 16. Le tronçon du bas 17b est solidement fixé, par exemple par des équerres 18 à une plaque d'embase 19 par exemple en acier. Sur cette plaque d'embase 19 sont articulées les trois jambes 20,21,22 d'un piétement tripode comportant trois pieds 23,24,25.

Sur la plaque d'embase 19 on aperçoit également trois pompes hydrauliques respectivement 26, 27, 28 dont le rôle et l'utilisation seront décrits plus loin. En 29 on a référencé un module de télémétrie et de télé contrôle permettant de repérer et de guider depuis la surface le parfait positionnement sur le sous-sol marin de l'embase pourvue de son piétement.

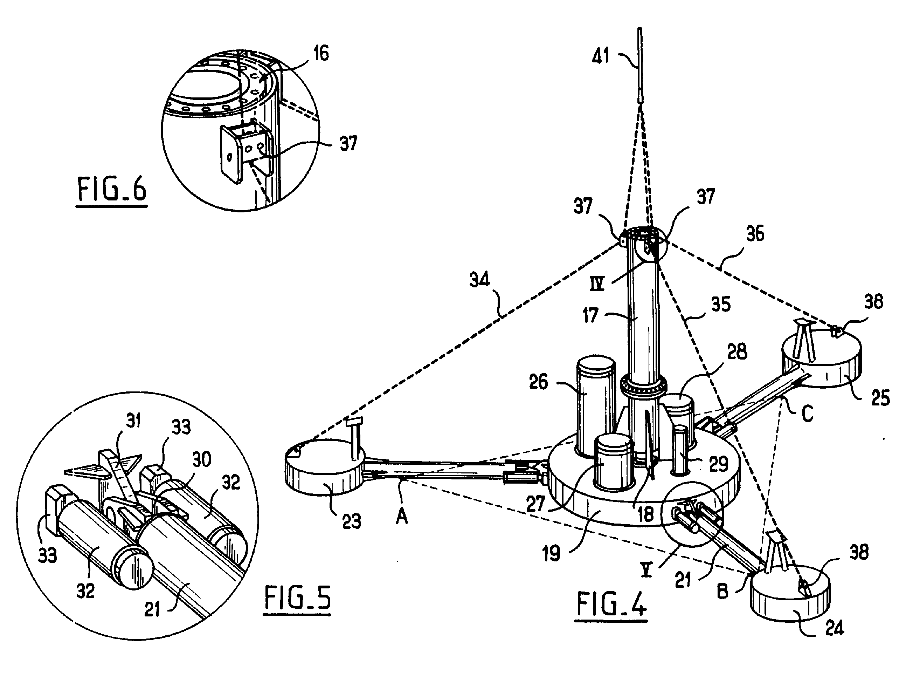

Dans le mode de réalisation illustré aux figures 2 à 6, les trois jambes 20, 21, 22 du piétement tripode sont articulées sur la plaque d'embase 19 comme il apparaît plus clairement à la figure 5, où l'on voit la jambe 21 du tripode qui s'articule à sa base par une chape 30 sur une ferrure 31 soudée sur le pourtour de la plaque d'embase 19. La jambe 21 comporte également de chaque côté des verrous à ressort de pression 32 qui en venant s'appuyer sur des patins 33 soudés sur le pourtour de la plaque d'embase 19, viennent verrouiller en position d'extension, comme montré à la figure 4, les jambes du piétement de l'embase lorsqu'elles ont été déployées. Dans le mode de réalisation illustré, le déploiement des jambes du piétement s'obtient en laissant filer les trois câbles référencés 34, 35 et 36 qui passent sur des dérouleurs 37 fixés vers la partie supérieure du tube 17, lesdits câbles étant fixés à leur extrémité supérieure sur un autre câble 41 qui peut être relevé ou abaissé depuis la surface.

À la figure 4, on a référencé par les lettres A, B et C, les trois sommets d'un triangle que forme un filet fixé sous les pieds 23, 24, 25, dont les trois angles dans la position de départ de l'embase illustrée à la figure 2, sont rassemblés comme les trois pieds 23, 24, 25 contre l'extrémité supérieure du tube 17. Ce filet permet d'améliorer la stabilisation du piétement lorsqu'il est déposé sur le sol marin.

Aux figures 2 et 3, on voit la position des câbles 34, 35, 36 avant déploiement des jambes du piétement, et comment les pieds 23, 24, 25 sont retenus contre le tube 17 par une chape 38 soudée sur la face supérieure de chaque pied.

On va décrire maintenant la mise en oeuvre de l'invention.

Le dispositif pénétrateur 16 étant en place dans le tube 17 de l'embase, et celle-ci occupant la position repliée illustrée à la figure 2, l'ensemble est descendu sur le fond marin à l'endroit déterminé du prélèvement à effectuer ou de la mesure à relever.

Lorsque la plaque 19 se pose sur le sous-sol marin, les jambes du piétement sous l'effet de leur poids se déploient dans la position illustrée à la figure 5, avec le filet de stabilisation tendu entre les pieds.

On met alors en marche la pompe 27 qui est en communication par une tuyauterie (non représentée) avec la face inférieure creuse en forme de coupe de chaque pied 23, 24, 25, de façon à créer un vide dans le volume de chaque pied. Cette succion, selon un principe connu, permet de plaquer sur le sol marin avec une force considérable, fonction du volume ménagé sous chaque pied, l'embase du dispositif. Le volume des pieds est choisi de façon à permettre une force de plaquage sur le sol marin au moins égale à la force de pénétration dans le sol marin qui va être développée au niveau de l'outil perforateur.

Le dispositif étant ainsi en place sur le sous-sol marin, il va être possible de mettre en oeuvre le dispositif pénétrateur formant vérin fluidique. À cet effet, il suffit de mettre en route la pompe hydraulique 26 qui est en liaison avec le volume de la chambre 3 par une communication référencée 39 à la figure 1. La pompe 26 est du type réversible permettant l'aspiration ou le refoulement du fluide dans la chambre 3. Pour faire pénétrer l'outil 1 dans le sol, on aspire au moyen de la pompe 26 le fluide contenu dans la chambre 3. Il s'agira normalement d'eau de mer que la pompe refoulera dans le milieu marin ambiant. La pression hydraulique régnant au-dessus du piston 4 fait donc coulisser ce piston 4 et le tube 1 qui en est solidaire en le forçant à pénétrer dans le sous-sol marin à l'encontre de la force de succion des pieds 23, 24, 25 et du poids de l'embase.

Grâce à cette technique, il est possible, au moyen de l'instrumentation embarquée 14 en contrôlant le débit de la pompe hydraulique 26 d'obtenir une vitesse de pénétration parfaitement constante, par exemple de deux centimètres par seconde (2 cm/s) avec une tolérance de plus ou moins un demi-centimètre par seconde (½ cm/s). Un contrôle précis et fiable de la vitesse de pénétration peut donc être prévu et continuellement visualisé depuis la surface.

L'outil 1 peut être comme illustré au dessin un tube de prélèvement d'un échantillon. Dans ce cas, au fur et à mesure de la pénétration dans le sol du tube 1, qui coulisse parallèlement à l'axe y'y du dispositif, le piston 12 remonte en même temps que l'instrumentation 14, ceci pouvant être contrôlé en particulier par la reprise du câble 15. Dans ce cas également, il est prévu avantageusement à l'extrémité inférieure du tube 1 un organe d'obturation, tel par exemple qu'une vanne à boisseau (non représentée) qui sera ouverte lors de la pénétration et sera obturée lors de la remontée de l'outil. Pour remonter l'outil, il suffit d'inverser le fonctionnement de la pompe 26 afin de remplir à nouveau de fluide la chambre 3 et faire ainsi remonter le piston 4 à l'encontre de la pression hydraulique du milieu ambiant en pompant par la connexion 39 l'eau de mer du milieu ambiant, la pompe assurant le différentiel de pression nécessaire à cet effet.

Lorsqu'on veut récupérer l'ensemble du dispositif mis en oeuvre, il suffit de ré-enrouler le câble 41 après avoir cependant inversé la succion au niveau des pieds 23, 24, 25 pour les libérer du sous-sol marin. Les pieds se relèvent d'abord pour reprendre la position illustrée à la figure 2.

L'outil 1 peut aussi être constitué par une sonde de mesure, par exemple relevant des données électriques qui vont fournir des renseignements sur la qualité des sols rencontrés.

Dans un mode de réalisation pratique, le tube intérieur 1 pourra avoir un diamètre de trois pouces (7,62 cm), et le tube extérieur 2 un diamètre intérieur de six, sept ou huit pouces (15,24, 17,78, 20,32 cm). Dans de telles conditions, la poussée hydraulique agissant sur le piston 4 à diverses profondeurs varie comme l'indique le calcul entre 13 tonnes pour une profondeur de 1.000 m et un tube extérieur de 6 pouces ou de 27 tonnes pour 1 tube extérieur de 8 pouces et 27 tonnes pour une profondeur de 2000 mètres et un tube extérieur de 6 pouces jusqu'à 55 tonnes pour une profondeur de 2000 mètres et un tube extérieur de 8 pouces. Les valeurs indiquées sont des ordres de grandeur et varient en fonction des forces de frottement.

On comprend que dans ces conditions, on peut déterminer de façon précise, en fonction des buts recherchés l'outil le plus adéquat aux travaux envisagés et en fonction des sols rencontrés.

Avec un dispositif conforme à l'invention, on peut envisager des travaux à très grande profondeur jusqu'à plus de 3.000 mètres, avec une technologie simple et des structures légères, le dispositif ne nécessitant pour son fonctionnement que des organes connus tels que des pompes hydrauliques haute pression qui peuvent être alimentées par exemple par un câble électroporteur classique permettant d'acheminer une puissance de six kilowatts (6KW) à la profondeur de travail.

Les outils de pénétration auront une longueur variable selon les travaux envisagés, par exemple de 10 à 30 mètres au moyen de multiples tronçons unitaires de 5 mètres.

Bien que l'on ait décrit un tripode à jambes articulées, on peut évidemment prévoir d'autres types de piétement, et par exemple un tripode ou quadripode à jambes télescopiques dont la longueur et ou l'orientation pourront être commandées depuis la surface au moyen d'une pompe hydraulique auxiliaire comme par exemple la pompe référencée 28.

## Revendications

1. Dispositif pour faire pénétrer dans le sous-sol marin, en particulier à profondeurs importantes dépassant un millier de mètres, un outil tubulaire de prélèvement d'échantillons du sol ou de mesure des caractéristiques de ce sol, dans lequel l'outil tubulaire (1) que l'on veut faire pénétrer dans le sous-sol marin est assujetti à une embase (19) de positionnement sur le fond marin, et le dispositif comprend au moins un vérin fluidique (16), pouvant être commandé de la surface, qui est fixé à ladite embase comprenant un piston (4) se déplaçant dans une chambre annulaire cylindrique (3) à axe dirigé parallèlement à l'axe (y'y) de pénétration de l'outil (1), en entraînant l'outil (1) en fonction de l'évacuation ou de l'admission du fluide qui est réalisée dans ladite chambre (3), ledit piston (4) étant soumis à la pression hydrostatique régnant à la profondeur où a été descendu le dispositif en étant mis en communication avec le milieu marin de son côté extérieur à ladite chambre (3), ledit dispositif étant **caractérisé en ce que** pour commander ledit vérin fluidique, on utilise une pompe hydraulique (26) du type réversible qui est mise en communication avec le volume de la chambre (3).

2. Dispositif selon la revendication 1, **caractérisé en ce que** l'outil tubulaire précité (1) constitue au moins en partie le piston précité du vérin fluidique (16).

3. Dispositif selon la revendication 1 ou la revendication 2, **caractérisé en ce que** la paroi extérieure de la chambre (3) du vérin fluidique (16) est constituée de plusieurs tronçons (2a, 2b, ...,2n) de tubes fixés bout à bout, par exemple au moyen de viroles (8,9).

4. Dispositif selon l'une quelconque des revendications précédentes, **caractérisé en ce que** l'outil (1) est constitué au moins en partie de tronçons de tubes vissés les uns au bout des autres.

5. Dispositif selon l'une quelconque des revendications précédentes, **caractérisé en ce que**, vers la partie supérieure du vérin, est disposé un piston annulaire (4) qui coulisse de façon étanche dans ladite chambre (3) en étant solidaire de la paroi extérieure de la partie en regard de l'outil (1), tandis qu'à la base du vérin se trouve un piston annulaire (6) qui est solidaire de la paroi intérieure du tube extérieur (2) du vérin et dans lequel coulisse de façon étanche la paroi extérieure de la partie en regard de l'outil (1).

6. Dispositif selon l'une quelconque des revendications précédentes, **caractérisé en ce que** sont prévues, dans ladite chambre (3) entre la paroi extérieure de l'outil (1) et la paroi intérieure du tube extérieur (2) du vérin, des bagues entretoises (10a,..., 10j) susceptibles de coulisser dans ladite chambre annulaire en étant guidées par des câbles (11), lesdites bagues comportant des trous de passage (40) pour le fluide dans ladite chambre.

7. Dispositif selon l'une quelconque des revendications précédentes, **caractérisé en ce que**, à la base de l'outil, est prévue une instrumentation (14) pour la commande et le relevé des mesures effectuées par l'outil (1).

8. Dispositif selon l'une quelconque des revendications précédentes, **caractérisé en ce que** ladite pompe hydraulique (26) est montée sur ladite embase (19) pour réaliser l'admission ou l'évacuation du fluide dans ladite chambre (3) s'agissant d'eau de mer échangée avec le milieu marin ambiant.

9. Dispositif selon l'une quelconque des revendications précédentes, **caractérisé en ce que** ladite embase (19) est solidaire d'un piétement (20,21,22) assurant le bon positionnement et la bonne orientation du dispositif sur le sous-sol marin.

10. Dispositif selon la revendication 9, **caractérisé en ce que** ledit piétement comprend des pieds (23,24,25) du type à succion, au moins une pompe hydraulique (27) étant prévue sur ladite embase (19) pour réaliser cette succion.

11. Dispositif selon l'une quelconque des revendications précédentes, **caractérisé en ce que** l'outil tubulaire (1) étant un outil de prélèvement d'échantillons, il comporte au moins à son extrémité basse un organe d'obturation tel qu'une vanne à boisseau.

12. Procédé pour faire pénétrer dans le sous-sol marin, en particulier à profondeurs importantes dépassant un millier de mètres un outil tubulaire de prélèvement d'échantillons du sol ou de mesure des caractéristiques de ce sol utilisant un dispositif selon l'une quelconque des revendications de dispositif précédentes, **caractérisé en ce que** l'on commande depuis la surface, à partir d'une instrumentation embarquée (14) sur ledit outil, le mouvement de pénétration dans le sous-sol marin dudit outil ou son mouvement d'extraction du sous-sol marin, en commandant parallèlement l'évacuation du fluide contenu dans la chambre (3) ou l'admission du fluide dans la chambre.(3)

## Patentansprüche

1. Vorrichtung zum Einführen eines rohrförmigen Werkzeugs in den Meeresboden zur Entnahme von Bodenproben oder zum Messen der Merkmale dieses Bodens, speziell in großen Tiefen von mehr als tausend Metern, wobei das rohrförmige Werkzeug (1), das man in den Meeresboden einführen möchte, an einem Sockel (19) zum Aufstellen auf dem Meeresboden festgemacht ist, und die Vorrichtung zumindest einen Fluidzylinder (16) enthält, der von der Meeresoberfläche aus angesteuert werden kann, auf dem besagten Sockel befestigt ist, und mit einem Kolben (4) ausgestattet ist, der sich in einer zylindrischen ringförmigen Kammer (3) auf einer Achse bewegt, die parallel zur Einführachse (y'y) des Werkzeugs (1) verläuft, wobei das Werkzeug (1) je nach Auslauf oder Zulauf des Zylindermediums aus der oder in die besagte Kammer (3) bewegt wird, und der besagte Kolben (4) dem hydrostatischen Druck ausgesetzt ist, der in der Tiefe vorherrscht, in die die Vorrichtung abgelassen wurde, und er mit seiner Seite außerhalb der besagten Kammer (3) mit der Meeresumgebung in Verbindung gebracht wird, und die besagte Vorrichtung **dadurch gekennzeichnet ist, dass** man zum Ansteuern des besagten Fluidzylinders eine umkehrbare Hydraulikpumpe (26) verwendet, die mit dem Volumen der Kammer (3) zusammenwirkt.

2. Vorrichtung nach Anspruch 1, **dadurch gekennzeichnet, dass** das zuvor genannte rohrförmige Werkzeug (1) zumindest einen Teil des zuvor genannten Kolbens des Fluidzylinders (16) bildet.

3. Vorrichtung nach Anspruch 1 oder nach Anspruch 2, **dadurch gekennzeichnet, dass** die Außenwand der Kammer (3) des Fluidzylinders (16) aus mehreren Rohrabschnitten (2a, 2b, ...2n) besteht, die beispielsweise durch Ringbeschläge (8, 9) miteinander verbunden sind.

4. Vorrichtung nach irgendeinem der vorherigen Ansprüche, **dadurch gekennzeichnet, dass** das Werkzeug (1) zumindest teilweise aus Rohrabschnitten besteht, die miteinander verschraubt sind.

5. Vorrichtung nach irgendeinem der vorherigen Ansprüche, **dadurch gekennzeichnet, dass** in Richtung des oberen Abschnitts des Zylinders ein ringförmiger Kolben (4) angeordnet ist, der in wasserdichter Form durch die besagte Kammer (3) gleitet und dabei fest mit der Außenwand des Abschnitts gegenüber dem Werkzeug (1) verbunden ist, während sich an der Basis des Zylinders ein ringförmiger Kolben (6) befindet, der fest mit der Innenwand des Außenrohres (2) des Zylinders verbunden ist, und in der die Außenwand des Abschnitts gegenüber dem Werkzeug (1) in wasserdichter Form gleitet.

6. Vorrichtung nach irgendeinem der vorherigen Ansprüche, **dadurch gekennzeichnet, dass** in der besagten Kammer (3) zwischen der Außenwand des Werkzeugs (1) und der Innenwand des Außenrohres (2) des Zylinders Distanzringe (10a, ...10j) vorgesehen sind, die sich dazu eignen, durch die besagte ringförmige Kammer zu gleiten, und die durch Kabel (11) geführt werden, und die besagten Ringe Durchlassbohrungen (40) für das Zylindermedium in die besagte Kammer enthalten.

7. Vorrichtung nach irgendeinem der vorherigen Ansprüche, **dadurch gekennzeichnet, dass** an der Basis des Werkzeugs Instrumente (14) für die Steuerung und die Erhebung der vom Werkzeug (1) erhobenen Messwerte vorgesehen sind.

8. Vorrichtung nach irgendeinem der vorherigen Ansprüche, **dadurch gekennzeichnet, dass** die besagte Hydraulikpumpe (26) auf dem besagten Sockel (19) montiert ist, um für den Einlass oder den Auslass des Zylindermediums in der besagten Kammer (3) zu sorgen, wobei es sich um Meerwasser handelt, das mit der Meeresumgebung ausgetauscht wird.

9. Vorrichtung nach irgendeinem der vorherigen Ansprüche, **dadurch gekennzeichnet, dass** der besagte Sockel (19) fest mit einem Fußgestell (20, 21, 22) verbunden ist, das für die korrekte Positionierung und die korrekte Ausrichtung der Vorrichtung auf dem Meeresboden sorgt.

10. Vorrichtung nach Anspruch 9, **dadurch gekennzeichnet, dass** das besagte Fußgestell Füße (23, 24, 25) in der Art von Saugfüßen enthält, wobei zumindest eine Hydraulikpumpe (27) auf dem besagten Sockel (19) vorgesehen ist, um diese Saugwirkung zu erreichen.

11. Vorrichtung nach irgendeinem der vorherigen Ansprüche, **dadurch gekennzeichnet, dass** das rohrförmige Werkzeug (1) ein Werkzeug zur Entnahme von Stichproben ist, und es zumindest in seinem unteren Abschnitt eine Verschlussvorrichtung in der Art eines Kugelhahns enthält.

12. Verfahren zum Einführen eines rohrförmigen Werkzeugs in den Meeresboden zur Entnahme von Bodenproben oder zum Messen der Merkmale dieses Bodens, speziell in großen Tiefen von mehr als tausend Metern, unter Verwendung einer Vorrichtung nach irgendeinem der vorherigen Vorrichtungsansprüche, **dadurch gekennzeichnet, dass** man von der Oberfläche aus mit im besagten Werkzeug (1) eingebauten Instrumenten (14) die Einführbewegung des besagten Werkzeugs in den Meeresboden oder seine Ausfahrbewegung aus dem Meeresboden steuert, indem man parallel dazu den Auslauf des Mediums, das in der Kammer (3) enthalten ist, oder aber den Zulauf des Mediums in die Kammer (3) ansteuert.

## Claims

1. A device to rub a tubular tool which takes sample swabs of the ground, or measures characteristics of this ground, into the sea subsoil, in particular at significant depths exceeding one thousand metres, wherein the tubular tool (1) which is desired to rub into the sea subsoil, is subjected to a positioning collar (19) on the seabed, and the device includes at least one fluidic actuator (16), being able to be controlled from the surface, which is fixed to the said base, including a piston (4) coming out into a cylindrical, circular chamber (3) at an axle guided simultaneously to the (y'y) penetration axle of the tool (1), by driving the tool (1) in accordance with the exit or with the entry of the fluid which is achieved in the said chamber (3), the said piston (4) being subjected to hydrostatic pressure, present at the depth where the device has been lowered, by being put into communication with the sea environment of its exterior side to the said chamber (3), the said device being **characterised in that** to control the said fluidic actuator, a reversible type hydraulic pump (26) is used, which is put into communication with the volume of the chamber (3).

2. A device according to the claim 1, **characterised in that** the aforementioned tubular tool (1) is made up of at least in part, the aforementioned piston of the fluidic actuator (16).

3. A device according to the claim 1 or the claim 2, **characterised in that** the exterior wall of the chamber (3) of the fluidic actuator (16) is made up of several sections (2a, 2b, ...,2n) of tubes fixed end-to-end, for example by means of ferrules (8, 9).

4. A device according to any one of the previous claims, **characterised in that** the tool (1) is made up of at least in part, sections of tubes, each screwed to the ends of other ones.

5. A device according to any one of the previous claims, **characterised in that**, towards the higher part of the actuator, a circular piston (4) is positioned, which slides in a watertight way in the said chamber (3), by being connected to the exterior wall of the part opposite the tool (1), while at the base of the actuator sits a circular piston (6), which is connected to the interior wall of the exterior tube (2) of the actuator, and wherein the exterior wall of the part opposite the tool (1) slides in a watertight way.

6. A device according to any one of the previous claims, **characterised in that** spacer rings (10a,..., 10j) are intended, in the said chamber (3) between the exterior wall of the tool (1) and the interior wall of the exterior tube (2) of the actuator, susceptible to slide in the said circular chamber by being guided by cables (11), the said rings including apertures (40) for the fluid in the said chamber.

7. A device according to any one of the previous claims, **characterised in that**, at the base of the tool, instrumentation (14) is intended for the control and the summary of the measures carried out by the tool (1).

8. A device according to any one of the previous claims, **characterised in that** the said hydraulic pump (26) is mounted on the said collar (19) to achieve the entry or the exit of the fluid in the said chamber (3), regarding the sea water exchanged with the ambient sea environment.

9. A device according to any one of the previous claims, **characterised in that** the said collar (19) is connected to a base (20, 21, 22), ensuring the correct positioning and the correct orientation of the device on the sea subsoil.

10. A device according to the claim 9, **characterised in that** the said base includes suction type feet (23, 24, 25), at least one hydraulic pump (27) being intended on the said collar (19), to achieve this suction.

11. A device according to any one of the previous claims, **characterised in that** the tubular tool (1), being a tool which takes sample swabs, it includes on its lowest extremity, at least one obstruction mechanism, such as a plug valve.

12. A method to rub a tubular tool which takes sample swabs of the ground, or measures characteristics of this ground into the sea subsoil, in particular at significant depths exceeding one thousand metres, using a device according to any one of the previous device claims, **characterised in that** the penetration movement in the sea subsoil of the said tool or its extraction movement of the sea subsoil is controlled from the surface, from instrumentation (14) loaded on the said tool, by controlling the exiting of the fluid contained in the chamber (3) or the entry of the fluid in the chamber (3) simultaneously.
